# EUROPEAN PATENT SPECIFICATION

(11) **EP 3 002 108 B1**
(45) Date of publication and mention of the grant of the patent: **20.09.2017**
(21) Application number: 15187932.7
(22) Date of filing: 01.10.2015
(51) Int. Cl.: B29C 67/00, B33Y 30/00

(54) **APPARATUS FOR THREE-DIMENSIONAL PRINTING**
VORRICHTUNG FÜR DREIDIMENSIONALES DRUCKEN
APPAREIL POUR IMPRESSION TRIDIMENSIONNELLE

(30) Priority: 03.10.2014 US 201462059380 P; 30.09.2015 US 201514870307
(43) Date of publication of application: 06.04.2016
(73) Proprietor: TE Connectivity Corporation, Berwyn, PA 19312 (US)
(72) Inventor: Fry, Charles David, New Bloomfield, PA Pennsylvania 17068 (US); Hornung, Craig Warren, Harrisburg, PA Pennsylvania 17112 (US); Eldeeb, Yasser M., Harrisburg, PA Pennsylvania 17111 (US)
(74) Representative: Johnstone, Douglas Ian

(56) References cited:
- EP-A1- 2 883 685
- EP-A2- 0 508 080
- WO-A1-2015/129733
- WO-A2-97/19798
- US-A1- 2010 046 317
- US-A1- 2014 191 433

## Description

The present invention is directed to an apparatus for the production of a three-dimensional object from a variety of materials. In particular, the invention is directed to an apparatus for producing production quantities of a three-dimensional object from filled and unfilled polymers.

It is common in plastic parts manufacturing to produce large batch sizes and serial parts by injection molding or extrusion. The advantage of plastic injection molding is, in particular, owing to the highly accurate production of complex part geometries, whereby the functionality of the injection molding process optimally satisfies the requirements for the cost-effective and economical production of plastic parts.

However, the need for individual units and small batch sizes of plastic parts, with or without the requirement of being supplied within a short time frame and with properties similar to those of injection molding parts, is continuing to grow. Manufacturing processes exist for the production of such parts which are widely known under the term "prototyping." The production of such parts is generally based on the generation of the geometry from 3D data. These geometries are produced in a variety of forms by using the corresponding material, such as meltable layers of powder by heat input, e.g. with lasers, by generative systems such as printing processes, in various combinations of powder parts and using the "melt strand" process.

Various three-dimensional printing devices are currently available to produce parts from such 3D data. Three-dimensional (3D) printing refers to processes that create 3D objects based on digital 3D object models and a materials dispenser. In 3D printing, a dispenser moves in at least 2-dimensions and dispenses material accordance to a determined print pattern. To a build a 3D object, a platform that holds the object being printed is adjusted such that the dispenser is able to apply many layers of material, for example as disclosed in US 2014/0191443 and WO 2015/129733 [only prior art for the purpose of EPC Article 54(3)]. EP 2883685 [only prior art for the purpose of EPC Article 54(3)] discloses a 3D printer wherein the platform is also horizontally moveable. In other words, a 3D object may be printed by printing many layers of material, one layer at a time. If the dispenser moves in 3-dimensions,
movement of the platform is not needed. 3D printing features such as speed, accuracy, color options and cost vary for different dispensing mechanisms and materials.

One such device or apparatus is shown in EP 1 886 793 A1, which shows a plasticizing unit common to the injection molding technique coupled to a material reservoir that can be placed under pressure for the liquid phase of a material. For the production of an object on a slide in a construction space, this material is being discharged via a discharge orifice in the shape of drops whereby, owing to the adhesive forces of the material, high pressure and generally high temperatures must also be applied. The apparatus includes means for the object carrier to move in the x, y and z directions relative to the discharge unit.

Other devices and methods directed to polymer materials are printed based on the principles of ink jet printing and are disclosed in various patents, such as U.S. Pat. Nos. 6,850,334 B1 and 6,658,314 B1. In addition, many patent and patent applications have published which relate to the design of the associated print heads and the elimination of problems arising in the process (e.g. U.S. Pat. No. 6,259,962 B1, WO 00/52624 A1, WO 00/76772 A1, WO 01/26023 A1, WO 01/53105 A2, WO 2004/044816 A1, WO 2004/050323 A1, WO 2004/096514 A2, WO 2004/096527 A2, WO 2005/053928 A2, EP 1 637 307 A2 or DE 199 31 112 A1).

However, known devices and methods are applicable to only a few select materials, as current 3D polymer printing technologies are limited by the extruder head design which are effective only for unfilled materials. In addition, many materials cannot be extruded well due to the nature of the knit line formed and the pressures required to extrude the material without degradation.

It would, therefore, be beneficial to provide a system, apparatus and method which could be used with a wide range of polymers, including filled and unfilled. In addition, it would be beneficial to provide a system, apparatus and method which maintains the material under pressure until the material is deposited on a build plate through a discharge pump.

The solution is provided by three-dimensional printing apparatus as disclosed herein. The apparatus includes a material receiving area for receiving material, a plasticizer, a discharge pump and an auger. The material receiving area receives material to be used in the three-dimensional printing process. The plasticizer includes a heating zone which places the material in shear. The discharge pump controls the flow of the material. The auger extends from the material receiving area through the plasticizer and terminates proximate the discharge pump. The material is maintained under pressure in the discharge pump until the material exits a nozzle provided at the end of the discharge pump for depositing on a build plate. The plasticizer has a cooled zone provided between the material receiving area and the heating zone, wherein the apparatus is configured such that if the flow of material through the plasticizer and discharge pump is stopped or slowed, the cooled zone will solidify the melted material, preventing backward flow of melted material to maintain the material in shear.

The invention will now be described by way of example with reference to the accompanying drawings in which:
FIG. 1 is a perspective view of an illustrative embodiment of the three-dimensional printing apparatus of the present invention.
FIG. 2 is a cross-sectional view of the three-dimensional printing apparatus of FIG. 1 taken along the longitudinal axis.
FIG. 3 is a cross-sectional view of a hopper of the three-dimensional printing apparatus, taken along line 3-3 of FIG. 2.
FIG. 4 is a cross-sectional view of a cold zone of the three-dimensional printing apparatus, taken along line 4-4 of FIG. 2.
FIG. 5 is a cross-sectional view of a heating zone of the three-dimensional printing apparatus, taken along line 5-5 of FIG. 2.
FIG. 6 is an enlarged cross-sectional view of a discharge pump of the three-dimensional printing apparatus of FIG. 2.
FIG. 7 is an enlarged view of a portion of an auger of the discharge pump of FIG. 6.

The description of illustrative embodiments according to principles of the present invention is intended to be read in connection with the accompanying drawings, which are to be considered part of the entire written description. In the description of embodiments of the invention disclosed herein, any reference to direction or orientation is merely intended for convenience of description and is not intended in any way to limit the scope of the present invention. Relative terms such as "lower," "upper," "horizontal," "vertical," "above," "below," "up," "down," "top" and "bottom" as well as derivative thereof (e.g., "horizontally," "downwardly," "upwardly," etc.) should be construed to refer to the orientation as then described or as shown in the drawing under discussion. These relative terms are for convenience of description only and do not require that the apparatus be constructed or operated in a particular orientation unless explicitly indicated as such. Terms such as "attached," "affixed," "connected," "coupled," "interconnected," and similar refer to a relationship wherein structures are secured or attached to one another either directly or indirectly through intervening structures, as well as both movable or rigid attachments or relationships, unless expressly described otherwise. Moreover, the features and benefits of the invention are illustrated by reference to the preferred embodiments.

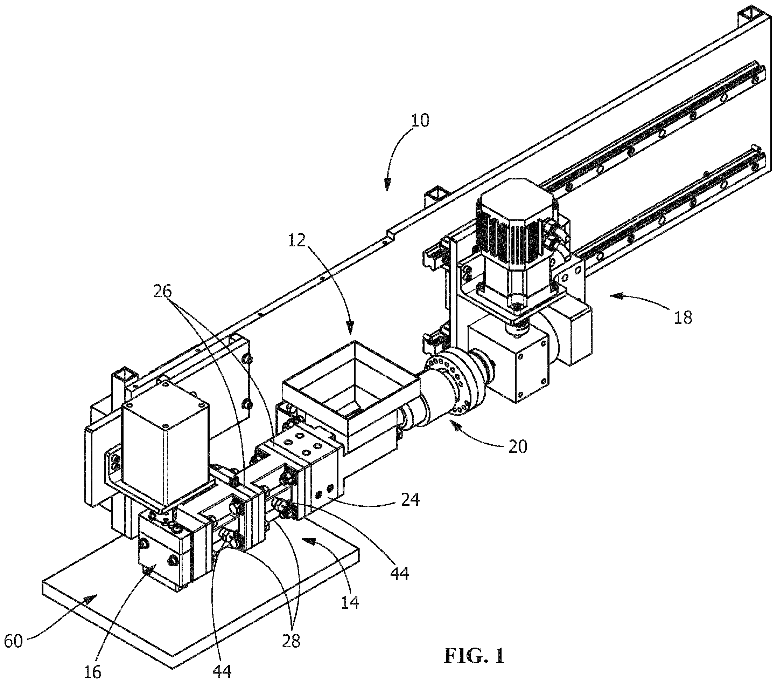

Referring to FIG. 1, the three-dimensional printing apparatus 10 includes a material receiving area or hopper 12, a plasticizer 14 and a discharge pump 16. In general, the three-dimensional printing apparatus 10 is configured to allow a wide range of materials to be used to produce a three-dimensional object, such as, but not limited to polymers, which may include, but are not limited to, filled polymers in the form of pellets or other ground forms. The materials can also include regrind. Any number of other materials can be used provided they are plasticizable by the device and are dischargeable by the discharge pump 16.

While only one three-dimensional printing apparatus 10 is shown, other similar three-dimensional printing apparatus 10 may be added and used in parallel to either increase production rates or provide additional material types such as support materials or other colors.

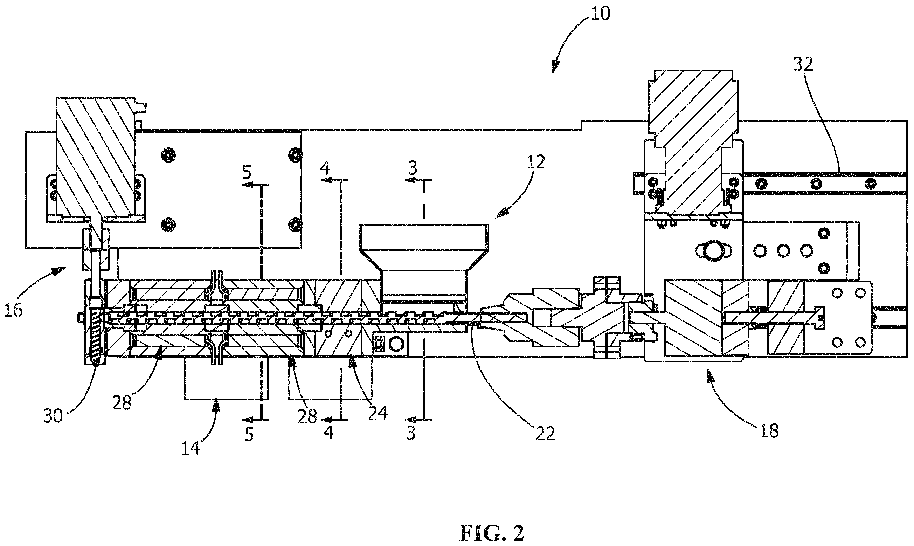

As best shown in FIGS. 1 and 2, the three-dimensional printing apparatus 10 include a motor and drive train transmission 18, a chuck 20, an auger 22, the hopper 12, cooled zone 24, insulators 26, heating zones or cartridges 28, a discharge pump 16 which includes a nozzle 30. In the embodiment shown, the unheated section 24, the insulators 26, and the heating zones or cartridges 28 form the plasticizer 14.

The motor and drive train transmission 18 are mounted on rails 32 to allow the motor and drive train transmission 18 to be moved along the longitudinal axis of the apparatus 10 to compensate for the different length of augers 22 which may be used. While rails 32 are shown, other known devices may be used which allow for the motor and drive train transmission 18 to be adjusted as needed.

The chuck 20 is attached to the motor and drive train transmission 18, allowing the chuck 20 to rotate as a drive shaft of the motor and drive train transmission 18 is turned. The chuck 20 has an adjustable opening to receive the auger 22 therein. The opening is adjustable to accommodate different size augers 22 which may be used.

Referring to FIG. 2, the auger or screw 22 has a core shaft which is rotatably driven at a desired speed by the motor and drive train transmission 18. The core shaft may have any desired diameter. The auger 22 has threads which extend from the hopper 12 to the discharge pump 16. In the embodiment shown, the core shaft has a consistent diameter and the threads are equally spaced. However, other configurations of the auger 22 can be used without departing from the scope of the invention. For example, in order to better control shear of various material during the heating of the material, the diameter of the core shaft may be varied and/or the spacing or pitch of the threads may be varied.

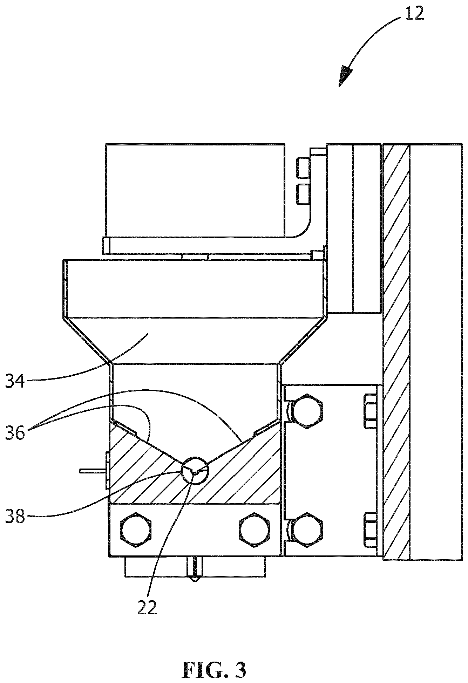

The hopper 12, as best viewed in FIGS. 2 and 3, has a material receiving opening 34 which receives the material therein. Sloped surfaces 36 are provided at the bottom of the opening 34 to feed the material into the auger receiving opening 38 through which the auger 22 extends. In the embodiment shown, the material is fed into the auger receiving opening 38 and the auger 22 by gravity. However, other methods can be used to feed the material to the auger 22.

The auger 22 moves the material into and through the plasticizer 14. The plasticizer 14 introduces shear forces to the material to facilitate the melt of the material. Many of materials do not flow well unless shear is introduced into the melt. Without the shear, excessive temperatures would be required to melt the material. These excessive temperatures would degrade the material.

In the embodiment shown, the plasticizer 14 includes one cooled zone 24 and two heating zones or cartridges 28. Insulators 26 are provide to thermally insulate the zones from each other. While one cooled zone 24 and two heated zones 28 are shown, other numbers of the zones 24, 28 can be used depending upon the material used and the amount or processing required to allow the material to properly flow to the discharge pump 16.

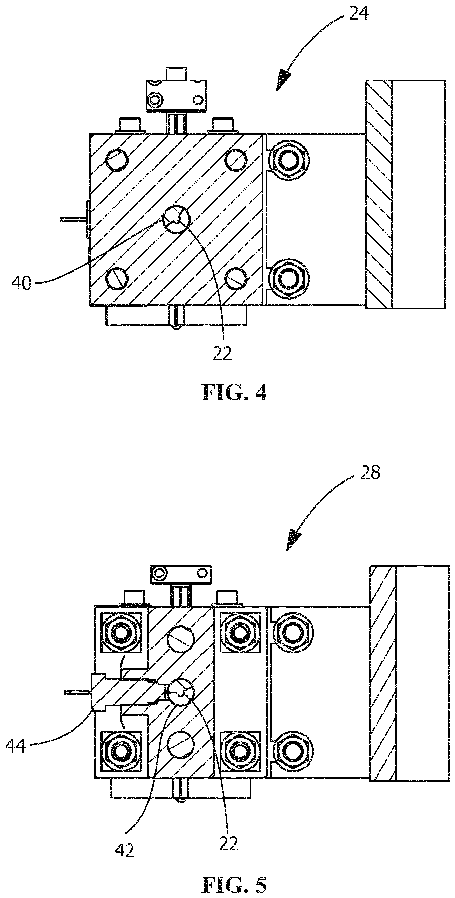

As best shown in FIG. 4, the auger 22 passes through the auger receiving opening 40 of the cooled zone 24. As best shown in FIG. 5, the auger 22 passes through the auger receiving openings 42 of the heated zones 28.

The heating zones 28 are provided to properly melt the material as the material is moved therethrough by the auger 22. Referring again to FIGS. 1 and 2, each of the heating zones 28 have temperature sensors 44 which allow the heating zones 28 to be properly monitored and controlled.

As previously described, the insulators 26 are positioned between the heating zones 28 and between a respective heating zone 28 and the cooled zone 24. This allows the temperature of each zone to be properly isolated and controlled. In the embodiment shown, the insulators 26 are made from phenolic material, but other materials can be used without departing from the scope of the invention.

As best shown in FIG. 2, the auger 22 extends through the plasticizer 14 and terminates in the discharge pump 16. The discharge pump 16 is attached to or integral with the nozzle 30. The discharge pump 16 is a constant or controlled flow rate pump which is used to feed the nozzle(s) 30. In one embodiment, the discharge pump 16 may be a small gear pump. However, while a gear pump is effective in maintaining the pressure and the flow of the material, gear pumps suffer from inconsistent performance characteristics during the start and stop functions.

In another embodiment, the discharge pump 16 may be a syringe style pump. A syringe style pump maintains a constant flow rate independent of the back pressure. In order to have continuous flow, a dual syringe system can be used where the second syringe is filling while the first is extruding. Alternatively, one syringe might be used to meter the required amount for a single pass and then the second used as the extrusion syringe.

In another embodiment, the discharge pump 16 may be a precision screw pump. This plasticizer can feed the precision screw pump and this can be used to create the positive pressure and flow rates. This screw pump would require significantly tighter tolerances than the type of screw pump that is used on the plasticizer.

When in use, material is deposited in the hopper or material receiving area 12. The material is received in the auger receiving opening 38, as was previously described. When the motor and drive train transmission 18 are engaged, the auger 22 is rotated, causing the threads of the auger 22 to move the material in the auger receiving opening 38 toward the discharge pump 16. As the material is moved, it is moved through the cooled zone 24 into the heated zone or zones 28 in which the material is melted. As previously described, the configuration and operation of the auger 22 and plasticizer 14 introduce shear forces to be applied to the material. This allows the material to be melted at lower temperatures, thereby conserving energy and preventing the degradation of the material due to excessive heating.

The material is then transported to the discharge pump 16. The material is maintained under pressure as it is transported to the discharge pump 16, thereby allowing the characteristics of the melted material to be maintained without the need for additional measures, such as heating the discharge pump, to be employed. The discharge pump 16 controls the flow of material independent of pressure.

As previously described, the discharge pump 16 may be in the form of a controlled flow rate pump or a constant flow rate pump depending upon the application. As the discharge pump 16 is modular, the discharge pump 16 may be removed and replaced with an alternate discharge pump depending upon the application and the object to be created, thereby allowing the volume of the material, etc. to be varied.

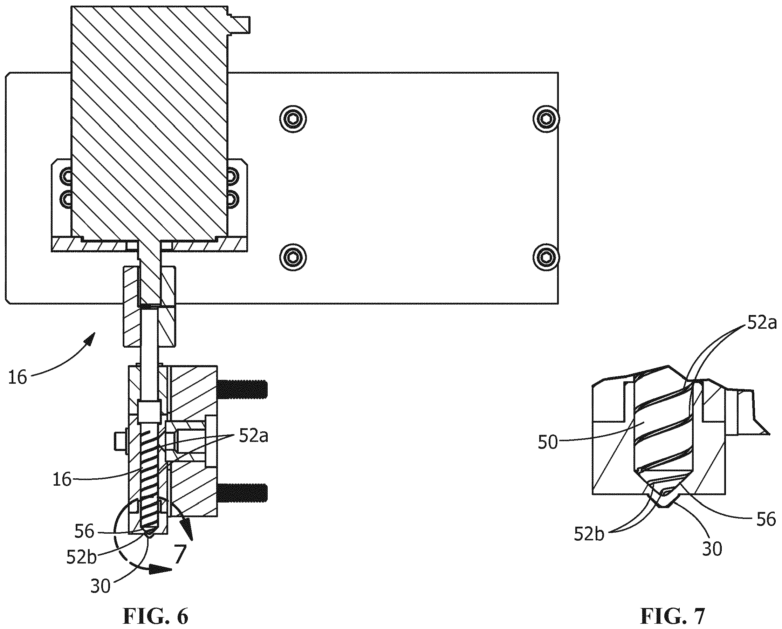

As best shown in FIGS. 6 and 7, the discharge pump 16 is a screw pump which includes an auger 50 with threads 52a and 52b. The auger or screw 50 is rotatably driven at a desired speed by an appropriate sized motor or the like. The auger 50 and threads 52a and 52b control the flow of the material. In addition, the auger 50 and threads 52a and 52b create the volume and flow rates required. The auger 50 has a tapered tip 56 which is positioned proximate the nozzle 30. In order to provide the pressure, volume and flow rates required, the tolerances between the threads 52 and the walls of the auger receiving opening 54 must be tightly controlled. For example, tolerances may be controlled to within 0.005 mm (0.0002 of an inch).

In the embodiment shown, the threads 52a which are spaced further from the tip 56 of the auger 50 are spaced apart further than the threads 52b which are spaced closer to and proximate the tip 56. In one illustrative embodiment the threads 52a are spaced apart by 1.27 mm (0.05 inches) while the threads 52b are spaced apart by 1.02 mm (0.04 inches). However, other spacing may be used without departing from the scope of the invention. For example, in order to better control the pressure, volume and flow rate of various material, the diameter of the core shaft of the auger 50 may be varied and/or the spacing or pitch of the threads 52a and 52b may be varied.

The auger 50 delivers that material to the nozzle 30 which in turn deposits the material onto a build plate 60 (FIG. 1) or other similar surface. In the embodiment shown, gravity facilitates the depositing of the material on the build plate 60.

The apparatus disclosed herein can be used with a wide range of polymers, including filled and unfilled. As the material is maintained under pressure during processing, the materials can be used without degradation to the materials.

## Claims

1. A three-dimensional printing apparatus (10) comprising;
a material receiving area (12) for receiving material to be used in the three-dimensional printing process;
a plasticizer (14) having a heating zone (28), the plasticizer (14) configured to place the material in shear;
a discharge pump (16) configured to maintain the material under pressure;
an auger (22, 50) which extends from the material receiving area (12) through the plasticizer (14) and terminates proximate the discharge pump (16);
wherein the material is maintained under pressure in the discharge pump (16) until the material exits a nozzle (30) provided at an end of the discharge pump (16) for depositing on a build plate (60), **characterized in that** the plasticizer (14) has a cooled zone (24) provided between the material receiving area (12) and the heating zone (28), wherein the apparatus is configured such that if the flow of material through the plasticizer (14) and discharge pump (16) is stopped or slowed, the cooled zone (24) will solidify the melted material, preventing backward flow of melted material to maintain the material in shear.

2. The three-dimensional printing apparatus (10) as recited in claim 1, wherein the discharge pump (16) is a controlled flow pump.

3. The three-dimensional printing apparatus (10) as recited in claim 1, wherein the discharge pump (16) is a constant flow pump.

4. The three-dimensional printing apparatus (10) as recited in claim 1, wherein the discharge pump (16) is a screw pump.

5. The three-dimensional printing apparatus (10) as recited in any preceding claim, wherein the discharge pump (16) includes an auger (22, 50) with threads (52a, 52b) which is rotatably driven wherein, the auger (22, 50) and threads (52a, 52b) are configured to create the volume and flow rates required for three-dimensional printing.

6. The three-dimensional printing apparatus (10) as recited in claim 5, wherein the threads (52a) which are spaced further from a tip (56) of the auger (22, 50) are spaced apart further then the threads (52b) which are spaced closer to the tip (56).

7. The three-dimensional printing apparatus (10) as recited in any preceding claim, further comprising a further heating zone (28) and insulators (26) which thermally insulate the heating zones (28) and the cooled zone (24) from each other.

8. The three-dimensional printing apparatus (10) as recited in claim 7, further comprising temperature sensors (44) in each of the heating zones (28).

9. The three-dimensional printing apparatus (10) as recited in any preceding claim, further comprising a motor and drive train transmission (18) mounted on rails (32) to allow the motor and drive train transmission (18) to be moved along the longitudinal axis of the three-dimensional printing apparatus (10), and a chuck (20) with an opening for receiving the auger (22) attached to the motor and drive train transmission (18).

10. The three-dimensional printing apparatus (10) as recited in any preceding claim, further comprising a build plate (60).

## Patentansprüche

1. Vorrichtung zum dreidimensionalen Drucken (10), umfassend:
einen Materialaufnahmebereich (12) zum Aufnehmen von Material, das im dreidimensionalen Druckverfahren verwendet werden soll;
einen Plastifikator (14), der eine Heizzone (28) aufweist, wobei der Plastifikator (14) konfiguriert ist, um das Material in Scherung zu platzieren;
eine Abgabepumpe (16), die konfiguriert ist, um das Material unter Druck zu halten;
eine Schnecke (22, 50), die sich von dem Materialaufnahmebereich (12) durch den Plastifikator (14) erstreckt und nahe der Abgabepumpe (16) endet;
wobei das Material in der Abgabepumpe (16) unter Druck gehalten wird, bis das Material eine Düse verlässt (30), die an einem Ende der Abgabepumpe (16) zum Aufbringen auf einer Bauplatte (60) bereitgestellt ist,
**dadurch gekennzeichnet, dass** der Plastifikator eine gekühlte Zone (24) aufweist, die zwischen dem Materialaufnahmebereich (12) und der Heizzone (28) bereitgestellt ist, wobei die Vorrichtung so konfiguriert ist, dass, falls der Materialfluss durch den Plastifikator (14) und die Abgabepumpe (16) gestoppt oder verlangsamt wird, die gekühlte Zone (24) das geschmolzene Material verfestigen wird, wodurch ein Rückwärtsfluss von geschmolzenem Material verhindert wird, um das Material in Scherung zu halten.

2. Vorrichtung zum dreidimensionalen Drucken (10) nach Anspruch 1, wobei die Abgabepumpe (16) eine Pumpe mit geregeltem Fluss ist.

3. Vorrichtung zum dreidimensionalen Drucken (10) nach Anspruch 1, wobei die Abgabepumpe (16) eine Pumpe mit konstantem Fluss ist.

4. Vorrichtung zum dreidimensionalen Drucken (10) nach Anspruch 1, wobei die Abgabepumpe (16) eine Schraubenpumpe ist.

5. Vorrichtung zum dreidimensionalen Drucken (10) nach einem vorhergehenden Anspruch, wobei die Abgabepumpe (16) eine Schnecke (22, 50) mit Gewinden (52a, 52b) einschließt, die rotierbar angetrieben wird, wobei die Schnecke (22, 50) und Gewinde (52a, 52b) konfiguriert sind, um das Volumen und die Flussraten zu erzeugen, die für dreidimensionales Drucken erforderlich sind.

6. Vorrichtung zum dreidimensionalen Drucken (10) nach Anspruch 5, wobei die Gewinde (52a), die von einer Spitze (56) der Schnecke (22, 50) weiter beabstandet sind, weiter beabstandet sind als die Gewinde (52b), die näher zur Spitze (56) beabstandet sind.

7. Vorrichtung zum dreidimensionalen Drucken (10) nach einem vorhergehenden Anspruch, ferner umfassend eine weitere Heizzone (28) und Isolatoren (26), die die Heizzonen (28) und die Kühlzone (24) voneinander isolieren.

8. Vorrichtung zum dreidimensionalen Drucken (10) nach Anspruch 7, ferner umfassend Temperatursensoren (44) in jeder der Heizzonen (28).

9. Vorrichtung zum dreidimensionalen Drucken (10) nach einem vorhergehenden Anspruch, ferner umfassend einen Motor und eine Antriebsstrangtransmission (18), montiert auf Schienen (32), um dem Motor und der Antriebsstrangtransmission (18) zu erlauben, entlang der Längsachse der Vorrichtung zum dreidimensionalen Drucken (10) bewegt zu werden, und ein Futter (20) mit einer Öffnung zum Aufnehmen der Schnecke (22), das am Motor und der Antriebsstrangtransmission (18) befestigt ist.

10. Vorrichtung zum dreidimensionalen Drucken (10) nach einem vorhergehenden Anspruch, ferner umfassend eine Bauplatte (60).

## Revendications

1. Appareil d'impression tridimensionnelle (10) comprenant ;
une zone de réception de matériau (12) destinée à recevoir un matériau à utiliser dans le processus d'impression tridimensionnelle ;
une unité de plastification (14) comportant une zone de chauffage (28), l'unité de plastification (14) étant configurée pour mettre le matériau en cisaillement ;
une pompe de décharge (16) configurée pour maintenir le matériau sous pression ;
une vis sans fin (22, 50) qui s'étend depuis la zone de réception de matériau (12) à travers l'unité de plastification (14) et se termine près de la pompe de décharge (16) ;
dans lequel le matériau est maintenu sous pression dans la pompe de décharge (16) jusqu'à ce que le matériau sorte d'une buse (30) fournie à une extrémité de la pompe de décharge (16) pour son dépôt sur une plaque de construction (60),
**caractérisé en ce que** l'unité de plastification (14) présente une zone refroidie (24) fournie entre la zone de réception de matériau (12) et la zone de chauffage (28), l'appareil étant configuré de telle sorte que si le flux de matériau passant à travers l'unité de plastification (14) et la pompe de décharge (16) est arrêté ou ralenti, la zone refroidie (24) solidifie le matériau fondu, empêchant un reflux du matériau fondu pour maintenir le matériau en cisaillement.

2. Appareil d'impression tridimensionnelle (10) selon la revendication 1, dans lequel la pompe de décharge (16) est une pompe à flux variable.

3. Appareil d'impression tridimensionnelle (10) selon la revendication 1, dans lequel la pompe de décharge (16) est une pompe à flux constant.

4. Appareil d'impression tridimensionnelle (10) selon la revendication 1, dans lequel la pompe de décharge (16) est une pompe à vis.

5. Appareil d'impression tridimensionnelle (10) selon l'une quelconque des revendications précédentes, dans lequel la pompe de décharge (16) comporte une vis sans fin (22, 50) à filets (52a, 52b) qui est entraînée en rotation dans lequel, la vis sans fin (22, 50) et les filets (52a, 52b) sont configurés pour créer le volume et les débits d'écoulement nécessaires pour l'impression tridimensionnelle.

6. Appareil d'impression tridimensionnelle (10) selon la revendication 5, dans lequel les filets (52a) qui sont davantage espacés d'une pointe (56) de la vis sans fin (22, 50) sont davantage espacés les uns des autres que les filets (52b) qui sont plus proches de la pointe (56).

7. Appareil d'impression tridimensionnelle (10) selon l'une quelconque des revendications précédentes, comprenant en outre une autre zone de chauffage (28) et des isolants (26) qui isolent thermiquement les zones de chauffage (28) et la zone refroidie (24) les unes des autres.

8. Appareil d'impression tridimensionnelle (10) selon la revendication 7, comprenant en outre des capteurs de température (44) dans chacune des zones de chauffage (28).

9. Appareil d'impression tridimensionnelle (10) selon l'une quelconque des revendications précédentes, comprenant en outre un ensemble moteur et transmission (18) monté sur des rails (32) pour permettre le déplacement de l'ensemble moteur et transmission (18) le long de l'axe longitudinal de l'appareil d'impression tridimensionnelle (10), et un mandrin (20) comportant une ouverture destinée à recevoir la vis sans fin (22) attaché à l'ensemble moteur et transmission (18).

10. Appareil d'impression tridimensionnelle (10) selon l'une quelconque des revendications précédentes, comprenant en outre une plaque de construction (60).
